# EUROPEAN PATENT APPLICATION

(11) **EP 4 661 147 A1**
(43) Date of publication of application: **10.12.2025**
(21) Application number: 24749914.8
(22) Date of filing: 15.01.2024
(51) Int. Cl.: H01M 10/0587, H01M 10/052, H01M 50/531

(54) **CYLINDRICAL NON-AQUEOUS ELECTROLYTE SECONDARY BATTERY**

(30) Priority: 31.01.2023 JP 2023012610
(71) Applicant: Panasonic Energy Co., Ltd., Osaka 570-8511 (JP)
(72) Inventor: YATOMI, Shota, Kadoma-shi, Osaka 571-0057 (JP)
(74) Representative: Eisenführ Speiser
(86) International application number: PCT/JP2024/000722
(87) International publication number: WO 2024/161960

(57) **Abstract**

A non-aqueous electrolyte secondary battery according to the present invention comprises: an electrode body (14) in which a long positive electrode (11) and a long negative electrode (12) are wound with a separator therebetween; a non-aqueous electrolyte; and an exterior can in which the electrode body and the non-aqueous electrolyte are housed. The negative electrode has: a non-facing part (60) which is on the winding start side from a facing part (59) that faces the winding inner side of a starting end part (11a) of the positive electrode in the winding direction and which is wound so as not to face the positive electrode; and a tab reinforcement plate group (70) which is joined to the non-facing part. The tab reinforcement plate group has a negative electrode tab (21) and reinforcement plates (71, 72). The negative electrode tab and at least one reinforcement plate are disposed so as to be arranged in a prescribed order for a total of 0.75 turns or more from a winding start end of the tab reinforcement plate group, which is an origin of winding, toward the winding end side.

## Description

### TECHNICAL FIELD

The present disclosure relates to a cylindrical non-aqueous electrolyte secondary battery.

### BACKGROUND

As a cylindrical non-aqueous electrolyte secondary battery, a battery described in Patent Literature 1 is conventionally known. In this non-aqueous electrolyte secondary battery, the negative electrode including a negative electrode mixture layer has a non-facing part, which does not face the positive electrode, at the winding-start side of the electrode assembly, and this non-facing part extends for more than or equal to two full turns. In this non-aqueous electrolyte secondary battery, the non-facing part is provided to suppress deformation at the winding-start side of the electrode assembly.

### CITATION LIST

### PATENT LITERATURE

PATENT LITERATURE 1: Japanese Unexamined Patent Application Publication No. 2013-137946

### SUMMARY

In a cylindrical non-aqueous electrolyte secondary battery, when the hollow part of the electrode assembly becomes blocked due to reasons such as melting of the separator at the time of abnormal heat generation, it may become impossible to secure a sufficient exhaust path to the outside via the hollow part, and this may result in a risk that high-temperature gas cannot be smoothly discharged to the outside. Accordingly, there is a demand for a cylindrical non-aqueous electrolyte secondary battery in which, even when abnormal heat generation occurs, blockage of the hollow part of the electrode assembly is inhibited, and gas can be smoothly discharged to the outside through the hollow part.

In this regard, one may consider a configuration in which blockage of the hollow part of the electrode assembly at the time of abnormal heat generation is inhibited by forming, at the winding-start side end of the negative electrode, a non-facing part which is wound without facing the positive electrode, joining a negative electrode tab to the non-facing part, and winding this negative electrode tab for more than or equal to 0.75 turns. However, according to this configuration, when the electrode assembly is produced, the two ends of the negative electrode tab in the winding direction may project in a cornered form, and this may result in an increase in the diameter of the wound electrode assembly, possibly making it difficult to insert the electrode assembly into an outer housing can. Furthermore, when repeating charging and discharging of the battery, the electrode plate may become buckled starting from cornered projecting portions of the negative electrode tab.

The present disclosure is directed to providing a cylindrical non-aqueous electrolyte secondary battery in which, even when abnormal heat generation occurs, gas can be smoothly discharged to the outside through the hollow part of the electrode assembly, and in which the two ends of the negative electrode tab in the winding direction can be prevented from projecting in a cornered form.

A cylindrical non-aqueous electrolyte secondary battery according to the present disclosure is a cylindrical non-aqueous electrolyte secondary battery comprising: an electrode assembly in which an elongate positive electrode and an elongate negative electrode are wound with an interposed separator; a non-aqueous electrolyte; and an outer housing can that houses the electrode assembly and the non-aqueous electrolyte. The negative electrode includes: a non-facing part which is wound without facing the positive electrode, and which is wound toward a winding-start side from a facing part that faces a winding inner face side of a starting end, in the winding direction, of the positive electrode; and a group of tab and reinforcement plates joined to the non-facing part. The group of tab and reinforcement plates includes a negative electrode tab and at least one reinforcement plate. With a winding-start side end of the group of tab and reinforcement plates being set as a starting point of winding, the negative electrode tab and the at least one reinforcement plate are sequentially arranged from the starting point toward a winding-end side in a predetermined order to extend for more than or equal to 0.75 turns in total.

According to the cylindrical non-aqueous electrolyte secondary battery according to the present disclosure, even when abnormal heat generation occurs, gas can be smoothly discharged to the outside through the hollow part of the electrode assembly, and the two ends of the negative electrode tab in the winding direction can be prevented from projecting in a cornered form.

### BRIEF DESCRIPTION OF DRAWINGS

FIG. 1 is an axial cross-sectional view of a cylindrical non-aqueous electrolyte secondary battery according to one embodiment of the present disclosure.
FIG. 2 is a perspective view of an electrode assembly of the non-aqueous electrolyte secondary battery.
FIG. 3 is a plan view showing the winding structure at the winding-start side of the electrode assembly.
FIG. 4 is a diagram showing a winding outer surface of an elongate negative electrode in a developed state.
FIG. 5 is a cross-sectional view taken along line A-A in FIG. 4.
FIG. 6 is a schematic diagram showing a state in which the hollow part of the electrode assembly is surrounded by a group of tab and reinforcement plates.
FIG. 7 is a diagram showing, in a manner corresponding to FIG. 5, a negative electrode constituting a cylindrical non-aqueous electrolyte secondary battery according to another example embodiment.
FIG. 8 is a diagram showing, in a manner corresponding to FIG. 4, a negative electrode constituting a cylindrical non-aqueous electrolyte secondary battery according to another example embodiment.
FIG. 9 is a diagram showing, in a manner corresponding to FIG. 5, a negative electrode constituting a cylindrical non-aqueous electrolyte secondary battery according to another example embodiment.

### DESCRIPTION OF EMBODIMENTS

Embodiments of a cylindrical non-aqueous electrolyte secondary battery according to the present disclosure will now be described in detail by reference to the drawings. It has been anticipated from the beginning that new embodiments may be constructed by appropriately combining characteristic features of embodiments and variants described below. Regarding the following embodiments, equivalent features in the drawings are labeled with the same reference numeral, and descriptions thereof are not repeated. The drawings include schematic diagrams, and the dimensional ratio of the length, width, height, and the like of each component is not necessarily identical between different drawings. In the present specification, the side of the cylindrical non-aqueous electrolyte secondary battery 10 toward the sealing assembly 17 in the axial direction (or height direction) will be referred to as "upper", and the side toward the bottom 68 of the outer housing can 16 in the axial direction will be referred to as "lower". Among the constituent elements described below, those that are not recited in the independent claim describing the most generic concept are optional elements, and are not essential elements. The present disclosure is not limited to the following embodiments and their variants, and various improvements and modifications are possible within the scope of the claims of the present application and their equivalents.

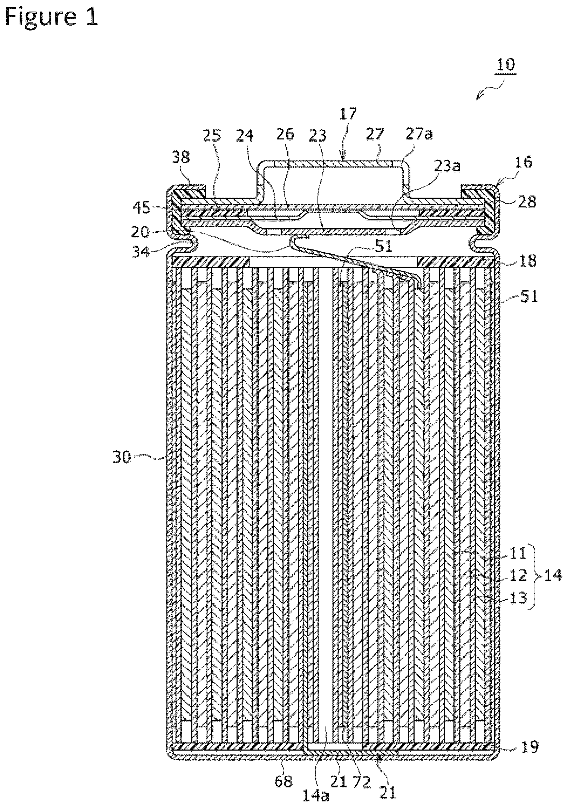

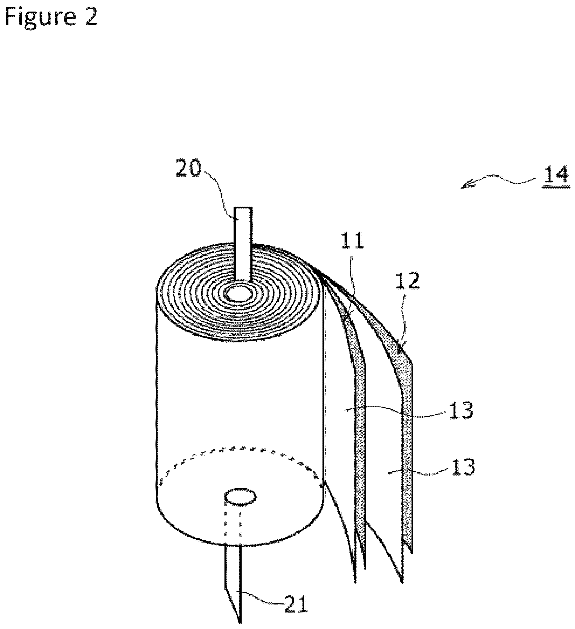

FIG. 1 is an axial cross-sectional view of a cylindrical non-aqueous electrolyte secondary battery 10 according to one embodiment of the present disclosure, and FIG. 2 is a perspective view of an electrode assembly 14 of the non-aqueous electrolyte secondary battery 10. First, the basic configuration of the non-aqueous electrolyte secondary battery 10 will be described using FIGS. 1 and 2. As shown in FIG. 1, the non-aqueous electrolyte secondary battery (hereinafter simply referred to as the battery) 10 comprises a wound electrode assembly 14, a non-aqueous electrolyte (not shown in drawing), a bottomed cylindrical metal outer housing can 16 that houses the electrode assembly 14 and the non-aqueous electrolyte, and a sealing assembly 17 that closes the opening of the outer housing can 16. As shown in FIG. 2, the electrode assembly 14 has a wound structure formed by winding an elongate positive electrode 11 and an elongate negative electrode 12 with an interposed elongate separator 13.

The negative electrode 12 is formed to have a size slightly larger than the positive electrode 11 in order to prevent lithium deposition. That is, the negative electrode 12 is formed to be longer than the positive electrode 11 in the longitudinal direction and in the width direction (or shorter direction). Further, two sheets of separator 13 are formed to have a size slightly larger than at least the positive electrode 11, and are, for example, arranged so as to sandwich the positive electrode 11. The negative electrode 12 may constitute the winding-start side end of the electrode assembly 14. However, in general, the separator 13 extends beyond the winding-start side end of the negative electrode 12, and the winding-start side end of the separator 13 serves as the winding-start side end of the electrode assembly 14.

The non-aqueous electrolyte contains a non-aqueous solvent and an electrolyte salt dissolved in the non-aqueous solvent. As the non-aqueous solvent, for example, esters, ethers, nitriles, amides, a mixed solvent containing two or more of the foregoing, and the like may be used. The non-aqueous solvent may contain a halogen-substituted product obtained by substituting at least part of hydrogen atoms in the above solvents with halogen atoms such as fluorine. The non-aqueous electrolyte is not limited to a liquid electrolyte, and may alternatively be a solid electrolyte using a gel polymer or the like. As the electrolyte salt, for example, a lithium salt such as LiPF₆ is used.

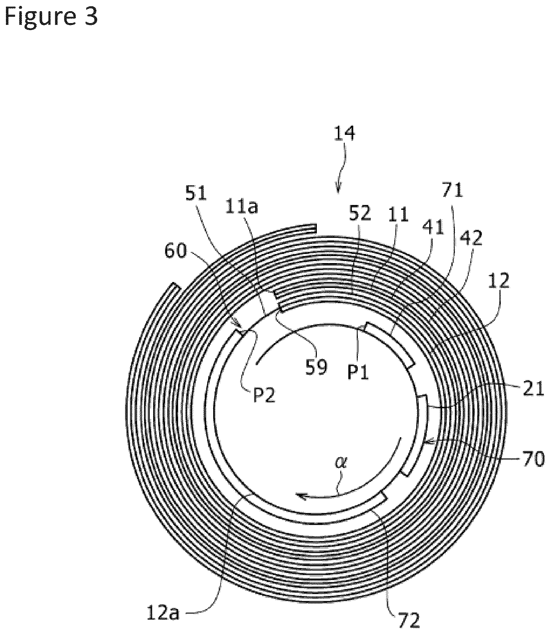

The positive electrode 11 comprises a positive electrode core 41 (see FIG. 3) and a positive electrode mixture layer 42 (see FIG. 3) formed on both sides of the positive electrode core 41. As the positive electrode core 41, it is possible to use a foil of a metal such as aluminum or an aluminum alloy that is stable in the potential range of the positive electrode 11, a film having such metal provided on its surface layer, and the like. The positive electrode mixture layer 42 contains a positive electrode active material, a conductive agent, and a binder. The positive electrode 11 can be produced, for example, by applying a positive electrode mixture slurry containing the positive electrode active material, the conductive agent, the binder, and the like onto the positive electrode core 41, drying the applied coating, and then compressing the coating to form the positive electrode mixture layer 42 on both sides of the positive electrode core 41.

The positive electrode active material is composed mainly of a lithium-containing metal composite oxide. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn, and Al.

Examples of the conductive agent contained in the positive electrode mixture layer 42 include carbon materials such as carbon black, acetylene black, Ketjenblack, and graphite. Examples of the binder contained in the positive electrode mixture layer 42 include fluororesins such as polytetrafluoroethylene (PTFE) and polyvinylidene fluoride (PVdF), polyacrylonitrile (PAN), polyimide resins, acrylic resins, and polyolefin resins. These resins may be used in combination with a cellulose derivative such as carboxymethyl cellulose (CMC) or a salt thereof, polyethylene oxide (PEO), and the like.

The negative electrode 12 comprises a negative electrode core 51 (see FIG. 3) and a negative electrode mixture layer 52 (see FIG. 3) formed on both sides of the negative electrode core 51. As the negative electrode core 51, it is possible to use a foil of a metal such as copper or a copper alloy that is stable within the potential range of the negative electrode 12, a film having such metal provided on its surface, and the like. The negative electrode mixture layer 52 contains a negative electrode active material and a binder. The negative electrode 12 can be produced, for example, by applying a negative electrode mixture slurry containing the negative electrode active material, the binder, and the like onto the negative electrode core 51, drying the applied coating, and then compressing the coating to form the negative electrode mixture layer 52 on both sides of the negative electrode core 51.

As the negative electrode active material, a carbon material that reversibly occludes and releases lithium ions is generally used. A preferable carbon material is graphite, which includes natural graphite such as flake graphite, massive graphite, and amorphous graphite, and artificial graphite such as massive artificial graphite and graphitized mesophase carbon microbeads. As the negative electrode active material, the negative electrode mixture layer 52 may contain a Si material containing silicon (Si). In that case, the negative electrode mixture layer 52 may contain silicon oxide represented by SiOₓ (where 0.5 ≤ x ≤ 1.6). As the negative electrode active material, it is also possible to use a metal other than Si that forms an alloy with lithium, an alloy containing such metal, a compound containing such metal, and the like.

As the binder contained in the negative electrode mixture layer 52, fluororesins, PAN, polyimide resins, acrylic resins, polyolefin resins, and the like may be used as in the case of the positive electrode 11, but styrene-butadiene rubber (SBR) or a modified product thereof is preferably used. In addition to SBR or the like, the negative electrode mixture layer 52 may for example contain CMC or a salt thereof, polyacrylic acid (PAA) or a salt thereof, polyvinyl alcohol, or the like.

As the separator 13, a porous sheet having ion permeability and insulating property is used. Specific examples of the porous sheet include a microporous thin film, a woven fabric, and a nonwoven fabric. As the material of the separator 13, polyolefin resins such as polyethylene and polypropylene, cellulose, and the like are suitable. The separator 13 may have either a single-layer structure or a multi-layer structure. A heat-resistant layer or the like may be formed on the surface of the separator 13.

As shown in FIG. 1, a positive electrode tab 20 is joined to the positive electrode 11, and a negative electrode tab 21 is joined to the winding-start side of the negative electrode 12. The negative electrode tab 21 is a constituent of a group 70 of tab and reinforcement plates, which is described later. The positive electrode tab 20 is a strip-shaped conductive member. No particular limitation is imposed on the constituent material of the positive electrode tab 20. The positive electrode tab 20 is preferably composed of a metal containing aluminum as the main component. The negative electrode tab 21 is a strip-shaped conductive member. No particular limitation is imposed on the constituent material of the negative electrode tab 21. The negative electrode tab 21 is preferably composed of a metal containing nickel or copper as the main component, or a metal containing both nickel and copper.

The battery 10 includes an insulating plate 18 above the electrode assembly 14, and an insulating plate 19 below the electrode assembly 14. The positive electrode tab 20 extends through a through hole in the insulating plate 18 and toward the sealing assembly 17, while the negative electrode tab 21 extends through a through hole in the insulating plate 19 and toward the bottom 68 of the outer housing can 16. The positive electrode tab 20 is connected by welding or the like to the lower surface of an internal terminal plate 23 of the sealing assembly 17. A terminal cap 27 constituting the top plate of the sealing assembly 17 is electrically connected to the internal terminal plate 23, and the terminal cap 27 serves as the positive electrode terminal. Further, the negative electrode tab 21 is connected by welding or the like to the inner surface of the bottom 68 of the metal outer housing can 16, and the outer housing can 16 serves as the negative electrode terminal.

In the present embodiment, the positive electrode tab 20 is electrically connected to an intermediate part, such as a central part, of the positive electrode core 41 in the winding direction. Further, the negative electrode tab 21 is electrically connected to the winding-start side end of the negative electrode core 51, and the winding-end side end of the negative electrode core 51 is placed in contact with the inner surface of the outer housing can 16. By thus electrically connecting both the winding-start side and the winding-end side of the negative electrode 12 to the negative electrode terminal, the current path is reduced, and electrical resistance is decreased. However, it is also possible to configure such that the winding-end side of the negative electrode core is not placed in contact with the inner surface of the outer housing can, and one negative electrode tab is electrically connected to the winding-start side end of the negative electrode core. Alternatively, it is possible to configure such that the electrode assembly includes two negative electrode tabs, and one of the negative electrode tabs is electrically connected to the winding-start side end of the negative electrode core, while the other negative electrode tab is electrically connected to the winding-end side end of the negative electrode core.

The battery 10 further comprises a resin gasket 28 provided between the outer housing can 16 and the sealing assembly 17. The sealing assembly 17 is fixed to the opening of the outer housing can 16 by being crimped via the gasket 28. With this feature, the internal space of the battery 10 is hermetically sealed. The gasket 28 is held between the outer housing can 16 and the sealing assembly 17, and insulates the sealing assembly 17 from the outer housing can 16. The gasket 28 serves the function of a sealing material for maintaining airtightness inside the battery, and also the function of an insulating material for insulating between the outer housing can 16 and the sealing assembly 17.

The outer housing can 16 houses the electrode assembly 14 and the non-aqueous electrolyte, and comprises a shoulder 38, a grooved portion 34, a cylindrical portion 30, and a bottom 68. The grooved portion 34 can be formed, for example, by performing spinning, in a radially inward manner, on a part of a side surface of the outer housing can 16 so as to cause that part to be recessed radially inward in an annular shape. The shoulder 38 is formed by bending the upper end of the outer housing can 16 inward toward the peripheral edge part 45 of the sealing assembly 17 when fixing the sealing assembly 17 to the outer housing can 16 by crimping.

The sealing assembly 17 has a structure obtained by laminating, in order from the electrode assembly 14 side, the internal terminal plate 23, a lower vent member 24, an insulating member 25, an upper vent member 26, and the terminal cap 27. Each of the members constituting the sealing assembly 17 has, for example, a disk shape or a ring shape, and the respective members except the insulating member 25 are mutually electrically connected. The internal terminal plate 23 has at least one through hole 23a. The lower vent member 24 and the upper vent member 26 are connected to each other at their central portions, and the insulating member 25 is interposed between peripheral portions of these vent members.

When abnormal heat generation occurs in the battery 10 and the internal pressure of the battery 10 increases, the lower vent member 24 deforms and ruptures in a manner pushing up the upper vent member 26 toward the terminal cap 27, and the current path between the lower vent member 24 and the upper vent member 26 is thereby cut off. When the internal pressure increases further, the upper vent member 26 ruptures, and gas is discharged via a through hole 27a in the terminal cap 27. By this gas discharge, it is possible to prevent the internal pressure of the battery 10 from increasing excessively and causing bursting of the battery 10, and safety of the battery 10 can be enhanced.

FIG. 3 is a plan view showing the winding structure at the winding-start side of the electrode assembly 14. In FIG. 3, illustration of the separator is omitted. As shown in FIG. 3, the negative electrode 12 includes a non-facing part 60 which is wound for more than or equal to 0.75 turns without facing the positive electrode 11, and which is wound toward the winding-start side from a facing part 59 that faces a winding inner face side of the starting end 11a, in the winding direction, of the positive electrode 11. The non-facing part 60 is preferably wound for less than or equal to two full turns, and more preferably wound for less than or equal to 1.5 turns.

The negative electrode 12 includes a group 70 of tab and reinforcement plates joined to the non-facing part 60. The group 70 of tab and reinforcement plates is composed of the negative electrode tab 21 and two reinforcement plates 71, 72. The negative electrode tab 21 and the two reinforcement plates 71, 72 are joined to the winding outer surface 12a of the negative electrode core 51 that constitutes the innermost periphery of the negative electrode 12. Specifically, from the winding-start side of the negative electrode core 51, the first reinforcement plate 71, the negative electrode tab 21, and the second reinforcement plate 72 are sequentially arranged toward the winding-end side with gaps provided between each other. Each of the reinforcement plates 71, 72 is made of a metal plate and is formed in a rectangular plate shape. With the winding-start side end of P1 of the first reinforcement plate 71, which is the winding-start side end of the group 70 of tab and reinforcement plates, being set as the starting point of winding, the negative electrode tab 21 and the two reinforcement plates 71, 72 are sequentially arranged from the starting point toward the winding-end side in a predetermined order to extend for more than or equal to 0.75 turns in total. With this feature, as described below, even when abnormal heat generation occurs in the battery 10, gas can be smoothly discharged to the outside through the hollow part 14a of the electrode assembly 14, and the two ends of the negative electrode tab 21 in the winding direction are prevented from projecting in a cornered form. Further, it is preferable that the length from the winding-start side end P1 to the winding-end side end P2 of the group 70 of tab and reinforcement plates is in the range of less than or equal to one full turn. No particular limitation is imposed on the order of arrangement of the negative electrode tab 21 and the two reinforcement plates 71, 72 in the winding direction.

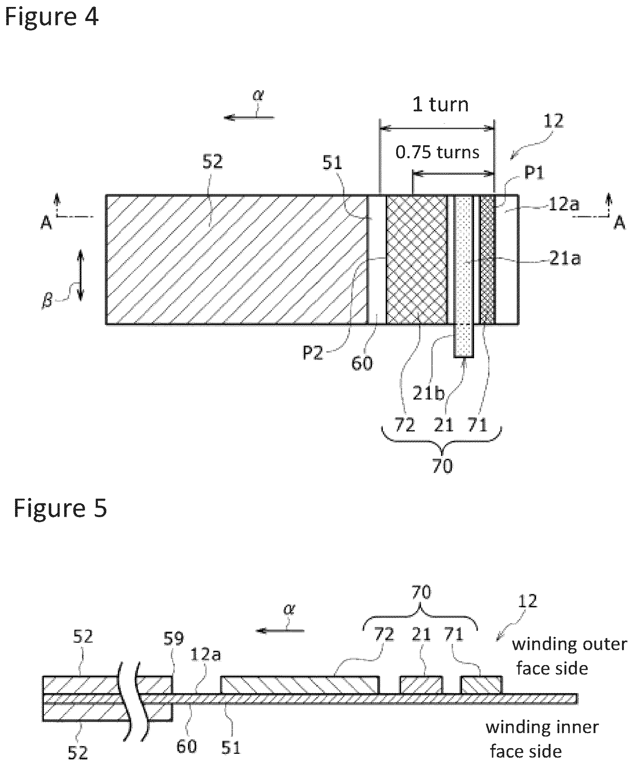

FIG. 4 is a diagram showing the winding outer surface 12a of the elongate negative electrode 12 in the developed state. In FIG. 4, the negative electrode mixture layer 52, the reinforcement plates 71, 72, and the negative electrode tab 21 are indicated respectively by diagonal-line hatching, diagonal crosshatching, and dot hatching. As shown in FIG. 4, in the width direction (i.e., the direction shown by arrow β) of the negative electrode 12, the length of the negative electrode 12, the length of the part of the negative electrode tab 21 covering the negative electrode 12, and the lengths of the reinforcement plates 71, 72 are identical.

Alternatively, in the width direction of the negative electrode 12, the length of the part of the negative electrode tab 21 covering the negative electrode 12 and the lengths of the reinforcement plates 71, 72 may be smaller than the length of the negative electrode 12. In that case, it is preferable that, in the width direction of the negative electrode 12, the length of the part of the negative electrode tab 21 covering the negative electrode 12 and the lengths of the reinforcement plates 71, 72 are identical. For example, when the length of the negative electrode 12 in the width direction of the negative electrode 12 is denoted by a[mm], and the length of the part of the negative electrode tab 21 covering the negative electrode 12 and the length of each of the reinforcement plates 71, 72 is denoted by b[mm], it is preferable that b ≥ 0.8a holds true.

FIG. 5 is a cross-sectional view taken along line A-A in FIG. 4. As shown in FIG. 5, the reinforcement plates 71, 72 and the negative electrode tab 21 can have approximately the same thickness. For example, the reinforcement plates 71, 72 can be made of the same metal as the negative electrode tab 21 or the negative electrode core 51. Alternatively, the reinforcement plates 71, 72 may be made of a material other than metal. For example, the reinforcement plates 71, 72 may be made of resin. However, from the perspective of enabling to withstand high temperatures and ensuring sufficient strength of the group 70 of tab and reinforcement plates when abnormal heat generation occurs in the battery 10, it is preferable that the reinforcement plates 71, 72 are made of metal.

The above-described battery 10 includes the above-noted non-facing part 60 which is wound without facing the positive electrode 11 and which extends from the facing part 59 toward the winding-start side, and the group 70 of tab and reinforcement plates including the negative electrode tab 21 and the two reinforcement plates 71, 72 is joined to the non-facing part 60. Furthermore, with the winding-start side end of the group 70 of tab and reinforcement plates being set as the starting point of winding, the negative electrode tab 21 and the two reinforcement plates 71, 72 are sequentially arranged from the starting point toward the winding-end side in a predetermined order to extend for more than or equal to 0.75 turns in total. Accordingly, the hollow part 14a of the electrode assembly 14 can be surrounded over a long distance in the circumferential direction by the group 70 of tab and reinforcement plates having high rigidity.

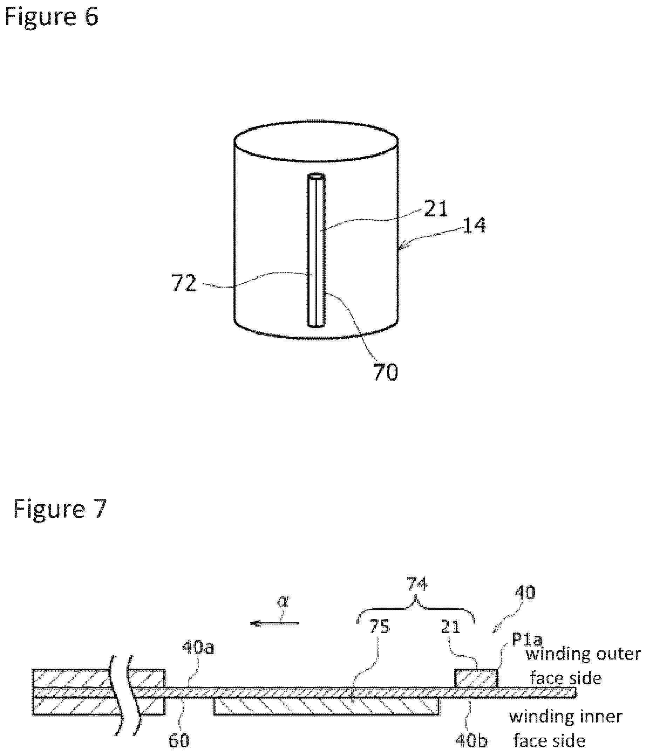

FIG. 6 is a schematic diagram showing a state in which the hollow part of the electrode assembly 14 is surrounded by the group 70 of tab and reinforcement plates. In FIG. 6, illustration of other structures constituting the electrode assembly 14 is omitted. As shown in FIG. 6, the hollow part 14a (FIG. 1) of the electrode assembly 14 can be covered in a surrounding manner by the highly rigid structure of the group 70 of tab and reinforcement plates. With this feature, even when abnormal heat generation occurs in the battery 10, blockage of the hollow part 14a is inhibited. As a result, gas can be smoothly discharged to the outside through the hollow part 14a, and safety of the battery 10 is thereby enhanced.

The group 70 of tab and reinforcement plates is composed of the negative electrode tab 21 and the two reinforcement plates 71, 72, which are discrete from each other. Accordingly, when producing the electrode assembly 14, the group 70 of tab and reinforcement plates can be curved along the curved shape of the non-facing part 60. As such, compared to a case where the hollow part 14a is covered in a surrounding manner with the negative electrode tab 21 alone, it is possible to better prevent the two ends of the negative electrode tab 21 in the winding direction from excessively projecting in a cornered form. Thus, it is possible to prevent the diameter of the wound electrode assembly 14 from becoming too large and causing difficulty in inserting the electrode assembly 14 into the outer housing can 16. Furthermore, it is also possible to suppress buckling of the negative electrode 12 which may start from cornered projecting portions of the negative electrode tab 21 when repeating charging and discharging of the battery 10.

FIG. 7 is a diagram showing, in a manner corresponding to FIG. 5, a negative electrode 40 constituting a battery according to another example embodiment. According to the configuration of this embodiment, in the negative electrode 40, the group 74 of tab and reinforcement plates is composed of a negative electrode tab 21 joined to the winding outer surface 40a of the non-facing part 60, and a reinforcement plate 75 joined to the winding inner surface 40b of the non-facing part 60. The negative electrode tab 21 and the reinforcement plate 75 are sequentially arranged in the winding direction so as not to overlap in the thickness direction. Further, with the winding-start side end P1a of the negative electrode tab 21, which is the winding-start side end of the group 74 of tab and reinforcement plates, being set as the starting point of winding, the negative electrode tab 21 and the reinforcement plate 75 are sequentially arranged from the starting point toward the winding-end side in a predetermined order to extend for more than or equal to 0.75 turns in total.

As with the configuration of FIGS. 1 to 6, even when abnormal heat generation occurs in the battery of this embodiment, gas can be smoothly discharged to the outside through the hollow part of the electrode assembly, and the two ends of the negative electrode tab 21 in the winding direction are prevented from excessively projecting in a cornered form. Other structures and working of this embodiment are the same as those of the configuration shown in FIGS. 1 to 6.

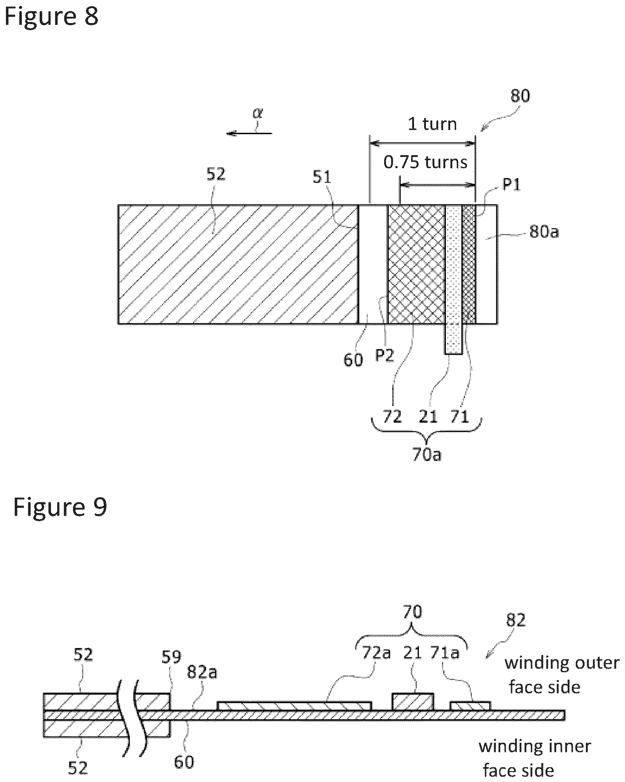

FIG. 8 is a diagram showing, in a manner corresponding to FIG. 4, a negative electrode 80 constituting a battery according to another example embodiment. According to the configuration of this embodiment, in the negative electrode 80, the group 70a of tab and reinforcement plates is composed of a negative electrode tab 21 and two reinforcement plates 71, 72 joined to the winding outer surface 80a of the non-facing part 60. The first reinforcement plate 71 and the negative electrode tab 21 are contiguous to each other, and the negative electrode tab 21 and the second reinforcement plate 72 are contiguous to each other. With the winding-start side end P1 of the first reinforcement plate 71, which is the winding-start side end of the group 70a of tab and reinforcement plates, being set as the starting point of winding, the negative electrode tab 21 and the two reinforcement plates 71, 72 are sequentially arranged from the starting point toward the winding-end side in a predetermined order to extend for more than or equal to 0.75 turns in total.

According to this embodiment, since the two reinforcement plates 71, 72 and the negative electrode tab 21 are contiguous to and in contact with each other, the components of the group 70a of tab and reinforcement plates can be arranged continuously in the winding direction. With this feature, even at high temperatures occurring in the event of abnormal heat generation, the encircling shape formed by the group 70a of tab and reinforcement plates around the hollow part of the electrode assembly can be easily maintained in a desired shape. Other structures and working of this embodiment are the same as those of the configuration shown in FIGS. 1 to 6.

FIG. 9 is a diagram showing, in a manner corresponding to FIG. 5, a negative electrode 82 constituting a battery according to another example embodiment. According to the configuration of this embodiment, the group 70b of tab and reinforcement plates is composed of a negative electrode tab 21 and two reinforcement plates 71a, 72a. The thickness of the two reinforcement plates 71a, 72a is smaller than the thickness of the negative electrode tab 21. Specifically, each of the reinforcement plates 71a, 72a has a thickness that is greater than or equal to 10 % and less than or equal to 50 % of the thickness of the negative electrode tab 21. According to this configuration, the reinforcement plates 71a, 72a can be curved more smoothly along the curved shape of the non-facing part 60 of the negative electrode 82 when producing the electrode assembly. In addition, the two ends of each of the reinforcement plates 71a, 72a in the winding direction can be prevented from excessively projecting in a cornered form. Accordingly, it is possible to further prevent the diameter of the wound electrode assembly 14 from becoming too large and causing difficulty in inserting the electrode assembly 14 into the outer housing can 16. It is also possible to suppress buckling of the negative electrode 12 which may start from cornered projecting portions of each of the reinforcement plates 71a, 72a when repeating charging and discharging of the battery 10. Other structures and working of this embodiment are the same as those of the configuration shown in FIGS. 1 to 6.

According to the present disclosure, configurations are sufficient so long as the group 70, 70a, 70b, 74 of tab and reinforcement plates includes a negative electrode tab and at least one reinforcement plate, and, with the winding-start side end of the group 70, 70a, 70b, 74 of tab and reinforcement plates being set as the starting point of winding, the negative electrode tab and the at least one reinforcement plate are sequentially arranged from the starting point toward the winding-end side in a predetermined order to extend for more than or equal to 0.75 turns in total. For example, the group of tab and reinforcement plates may be configured to include three or more reinforcement plates.

### REFERENCE SIGNS LIST

10 battery; 11 positive electrode; 11a starting end; 12 negative electrode; 12a winding outer surface; 13 separator; 14 electrode assembly; 14a hollow part; 16 outer housing can; 17 sealing assembly; 18, 19 insulating plate; 20 positive electrode tab; 21 negative electrode tab; 23 internal terminal plate; 23a through hole; 24 lower vent member; 25 insulating member; 26 upper vent member; 27 terminal cap; 27a through hole; 28 gasket; 30 cylindrical portion; 34 grooved portion; 38 shoulder; 40 negative electrode; 40a winding outer surface; 40b winding inner surface; 41 positive electrode core; 42 positive electrode mixture layer; 45 peripheral edge part; 51 negative electrode core; 52 negative electrode mixture layer; 59 facing part; 60 non-facing part; 68 bottom; 70, 70a, 70b group of tab and reinforcement plates; 71, 71a first reinforcement plate; 72, 72a second reinforcement plate; 74 group of tab and reinforcement plates; 75 reinforcement plate; 80 negative electrode; 80a winding outer surface; 82 negative electrode; 82a winding outer surface.

## Claims

1. A cylindrical non-aqueous electrolyte secondary battery, comprising:
an electrode assembly in which an elongate positive electrode and an elongate negative electrode are wound with an interposed separator;
a non-aqueous electrolyte; and
an outer housing can that houses the electrode assembly and the non-aqueous electrolyte, wherein
the negative electrode includes: a non-facing part which is wound without facing the positive electrode, and which is wound toward a winding-start side from a facing part that faces a winding inner face side of a starting end, in the winding direction, of the positive electrode; and a group of tab and reinforcement plates joined to the non-facing part,
the group of tab and reinforcement plates includes a negative electrode tab and at least one reinforcement plate, and
with a winding-start side end of the group of tab and reinforcement plates being set as a starting point of winding, the negative electrode tab and the at least one reinforcement plate are sequentially arranged from the starting point toward a winding-end side in a predetermined order to extend for more than or equal to 0.75 turns in total.

2. The cylindrical non-aqueous electrolyte secondary battery according to claim 1, wherein
the negative electrode tab and the at least one reinforcement plate are contiguous to each other.

3. The cylindrical non-aqueous electrolyte secondary battery according to claim 1, wherein
in a width direction of the negative electrode, a length of a part of the negative electrode tab covering the negative electrode and a length of the at least one reinforcement plate are identical.

4. The cylindrical non-aqueous electrolyte secondary battery according to claim 1, wherein
the reinforcement plate is made of metal.

5. The cylindrical non-aqueous electrolyte secondary battery according to claim 1, wherein
the reinforcement plate has a thickness that is greater than or equal to 10 % and less than or equal to 50 % of a thickness of the negative electrode tab.
